# EUROPÄISCHE PATENTSCHRIFT

(11) **EP 2 191 893 B1**
(45) Veröffentlichungstag und Bekanntmachung des Hinweises auf die Patenterteilung: **06.03.2019**
(21) Anmeldenummer: 08169465.5
(22) Anmeldetag: 19.11.2008
(51) Int. Cl.: B01L 3/00

(54) **Analyseverfahren und Vorrichtungen für biologische Reaktionen zwischen einer flüssigen und einer festen Phase**
Analysis method and devices for biological reactions between a liquid and a solid phase
Procédé d'analyse et dispositifs pour réactions biologiques entre une phase solide et une phase liquide

(43) Veröffentlichungstag der Anmeldung: 02.06.2010
(73) Patentinhaber: Euroimmun Medizinische Labordiagnostika AG, 23560 Lübeck (DE)
(72) Erfinder: Stöcker, Winfried, 23627 Groß Grönau (DE); Rateike, Martin, 23689 Pansdorf (DE); Maltzahn, Bianca, 23627 Groß Sarau (DE); Behring, Rasmus, 23562 Lübeck (DE)

(56) Entgegenhaltungen:
- EP-A- 0 075 605
- EP-A- 1 415 715
- WO-A-00/39587
- US-A1- 2005 196 318
- US-A1- 2007 237 687

## Beschreibung

Die vorliegende Erfindung betrifft spezielle Verfahren und Vorrichtungen zur Durchführung immunologischer, histo- und cytochemischer, molekularbiologischer, enzymologischer, klinisch-chemischer und anderer Analysen, beispielsweise in der medizinischen Laboratoriumsdiagnostik, bei denen an eine feste Phase gebundene Reaktionspartner mit in Flüssigkeiten gelösten Reaktanden inkubiert werden. Dazu werden Festphasensubstrate auf länglichen Adhäsionsflächen eines Objektträgers angeordnet und in Kontakt mit den Flüssigkeiten gebracht, die sich in - den Adhäsionsflächen genau gegenüber liegenden - Rinnen eines Reagenzträgers befinden, wobei in bestimmten Ausführungsformen zur Durchmischung der Reaktanden während der Inkubation eine kräftige Konvektion der gelösten Reaktionspartner in der Flüssigkeit erzwungen wird: Die Reaktionen laufen schneller ab, die Signale werden stärker und die Reaktivität jedes Substrats wird über die gesamte Fläche einheitlicher als es der Stand der Technik leisten kann. Werden mehrere Proben nebeneinander untersucht, verhindert die Anordnung, dass sich die Flüssigkeiten benachbarter Proben während der Inkubation untereinander vermischen. Zum Abschluss der Inkubation werden die Objektträger von den Reagenzträgern abgenommen und die Resultate ausgewertet. Beispiele für die Anwendung der Erfindung sind die Antikörperbestimmung im Serum von Patienten mit Verdacht auf Autoimmun- oder Infektionserkrankungen und Allergien durch indirekte Immunfluoreszenz oder Immunblotting und die Genotypisierung von Patientenproben mit Hilfe von Mikroarrays.

### Stand der Technik

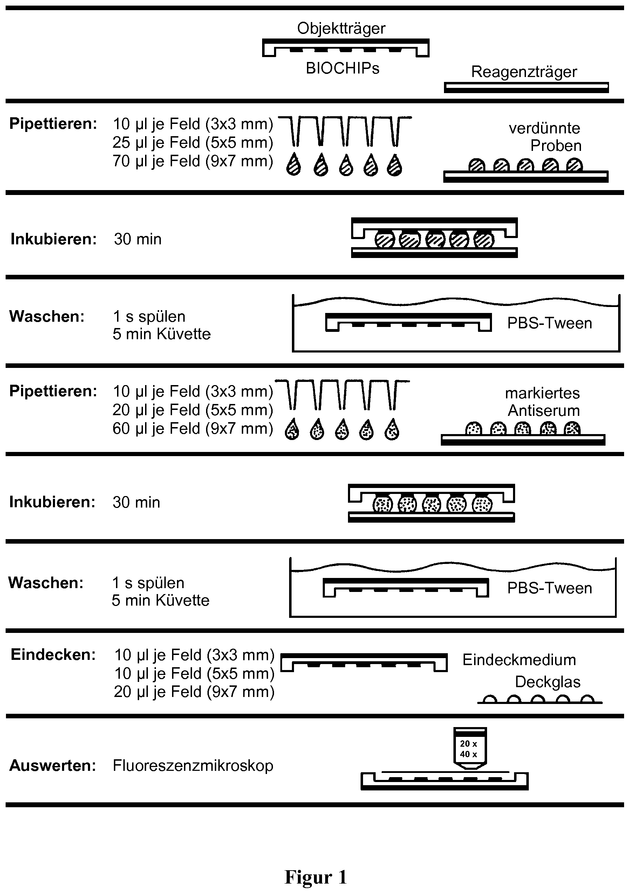

Für das Einsatzgebiet der Erfindung wird der Stand der Technik an einem Beispiel aus der medizinisch-immunologischen Labordiagnostik erläutert, dem "Indirekten Immunfluoreszenztest" zum Nachweis von Antikörpern in Patientenserum, siehe Figur 1. Das zu untersuchende Serum oder eine Verdünnung davon wird mit einem fest mit einem Objektträger verbundenen Substrat, welches den zu bestimmenden Antikörpern korrespondierende Antigene enthält, in Kontakt gebracht und eine bestimmte Zeit lang inkubiert. Als Substrate kommen unter anderem in Frage: Dünnschnitte biologischer Gewebe, Bakterienausstriche, Zellen oder in Lösung aufgetragene angetrocknete oder angekoppelte Antigentropfen. Bei positiven Proben binden sich jetzt spezifische Antikörper des Patientenserums an die korrespondierenden Antigene des Substrates, zum Beispiel an die DNS der Zellkerne eines Gewebeschnittes. Antikörper gegen DNS finden sich unter anderem bei Patienten mit der Krankheit Lupus erythematodes.

Nach dem ersten Inkubationsschritt werden überschüssige, ungebundene Antikörper mit Pufferlösung abgewaschen. Das Substrat wird nun ein zweites Mal inkubiert, diesmal mit einem gegen menschliches Immunglobulin gerichteten, Fluorescein-markierten Antihuman-Antikörper (dieser wurde zum Beispiel durch Immunisierung einer Ziege mit menschlichem Immunglobulin gewonnen). Im positiven Falle binden sich im zweiten Schritt die markierten Antikörper an die bereits gebundenen Antikörper des Patientenserums. Bei einem weiteren Waschschritt werden wieder überschüssige, nicht gebundene Antikörper entfernt. Danach wird Eindeckmedium aufgetropft, ein Deckglas aufgelegt und das fertig inkubierte Substrat mit dem Fluoreszenzmikroskop begutachtet. Bei positiven Proben fluoreszieren die Zellkerne des Substrates in Grün, wenn sie im Mikroskop mit (blauem) Licht einer Wellenlänge von etwa 488 Nanometer bestrahlt werden. Bei einem negativen Resultat bleiben die Zellkerne dunkel. Das Deckglas schafft eine für eine perfekte Abbildung erforderliche glatte, dem Substrat parallel und plan aufliegende Oberfläche und verhindert zudem, dass das MikroskopObjektiv in direkte Berührung mit dem Substrat gelangt. Das Eindeckmedium füllt den Raum zwischen Substrat und Deckglas aus und sorgt dadurch für einen streuungsfreien Strahlengang, es enthält Stoffe zur Reduktion des Ausbleichens der Fluoreszenz, sein pH ist auf eine maximale Fluoreszenz-Ausbeute eingestellt.

Die Indirekte Immunfluoreszenz wird weltweit in der Labordiagnostik eingesetzt, um jährlich in Millionen Patientenseren Autoantikörper oder Infektions-Antikörper zu analysieren. Um das Untersuchungsaufkommen besser zu bewältigen, versucht man, die Arbeitsabläufe zusammenzufassen und die Prozesse zu automatisieren. Nach dem allgemeinen Stand der Technik werden deshalb im Diagnostiklabor Objektträger mit mehreren Reaktionsfeldern verwendet, für die parallele Untersuchung mehrerer Patienten. Dieser Rationalisierungsschritt birgt die Gefahr, dass bei unachtsamem Vorgehen nebeneinander angeordnete Seren zusammenlaufen und manchen Patienten fälschlich die Diagnose ihres Objektträger-Nachbarn verpasst wird.

Der Stand der Analysetechnik dieses Einsatzgebietes bis zum Jahr 1979 ist in EP 0 018 435 beschrieben ¹. Dort wird auch eine neue Art der Inkubation für die Indirekte Immunfluoreszenz offengelegt, bei der die Patientenseren und die Reagenzien nicht direkt auf den Objektträger getropft werden, wie bisher üblich, sondern auf hydrophile Reaktionsfelder eines planen Reagenzträgers, deren Umgebung hydrophob ist. Der Objektträger enthält auf ebenfalls hydrophilen Reaktionsfeldern die Substrate, und diese werden mit einem definierten Abstand so über dem Reagenzträger positioniert, dass die Substrate in die ihnen zugeordneten Tropfen eintauchen, wodurch die Reaktionen für alle Felder eines Objektträgers gleichzeitig gestartet werden. Die Zahl der untersuchbaren Serumverdünnungen je Objektträger entspricht der Zahl seiner Reaktionsfelder. Zu den Vorteilen dieser Technik gehört, dass die Tropfen nicht mehr so leicht ineinander verlaufen können. Die Tropfenhöhe ist festgelegt und konstant und der Start der Reaktionen beim Auflegen eines Objektträgers auf die vorpipettierten Tropfen erfolgt simultan, dadurch sind die Reaktionen verschiedener Tests besser untereinander vergleichbar. Die Verdunstung wird verzögert und es setzen sich weitaus weniger störende unspezifische Farbniederschläge in den Substraten fest, weil diese während der Inkubation in die Gegenrichtung sedimentieren.

Inzwischen wurde die Indirekte Immunfluoreszenz durch eine spezielle Fragmentiertechnik (EP 0 117 262) weiter entwickelt ²: Die Substrate (zum Beispiel Gefrierschnitte, ausgesäte oder ausgestrichene Zellen, angekoppelte isolierte Antigene und so weiter) werden hier nicht direkt auf Objektträger aufgezogen, sondern erst einmal auf dünne Glasscheiben von zum Beispiel 0,15 mm Stärke. Daraufhin werden diese Glasscheiben, zusammen mit den darauf haftenden Substraten, in beliebig große Fragmente unterteilt (Biochips), und erst diese werden auf Objektträgern befestigt - zum Beispiel aufgeklebt. Die Fragmentiertechnik eignet sich besonders für die Massenproduktion von Substraten, weil es bedeutend leichter ist und schneller geht, einen etwas größeren Gewebeschnitt anzufertigen und ihn in kleine Biochips zu unterteilen, als viele kleine Gewebeschnitte herzustellen und sie direkt auf Objektträger zu montieren. Noch deutlicher wird der Produktivitätsfortschritt bei Zellkultur-Substraten oder Zellausstrichen bzw. bei mit definierten Antigenen überzogenen Oberflächen. Des Weiteren lassen sich beliebig umfangreiche Mosaiken aus verschiedenen Substraten zusammensetzen, sodass mit ein und demselben Tropfen einer Serumverdünnung oder der Reagenzlösung umfangreiche Antikörperprofile untersucht werden können ^{3, 4, 5}. Die Erfindung wird heute weltweit eingesetzt. Vorrichtungen und Verfahren zur weitgehend automatisierten Herstellung solcher Objektträger sind in der europäischen Patentanmeldung PCT/EP/2005/000974 (2005) ⁶ beschrieben.

Der Stand der Technik leidet an einer grundsätzlichen Unvollkommenheit, dass nämlich während der Inkubationen nicht für eine effektive ständige Konvektion in der flüssigen Phase gesorgt ist. Die Proben- oder Reagenzienflüssigkeit liegt in direktem Kontakt mit den Antigenhaltigen Strukturen. Entsprechende vorhandene Antikörper binden sich an die Zielantigene, und ihre Konzentration in unmittelbarer Umgebung der Antigene nimmt ab, während ein oder zwei Millimeter weiter noch hohe Antikörper-Konzentrationen vorliegen. Nur durch Diffusion wird der Gradient innerhalb der Untersuchungszeit nicht abgebaut, und die in der zitierten EP 0 018 435 vorgeschlagene Maßnahme zur Erzeugung einer Konvektion (periodische Änderung des Abstandes zwischen Objektträger und Reagenzträger zur Verformung der zwischen beiden gehaltenen runden Tropfen) war bei weitem nicht ausreichend effektiv. EP 0 075 605 zeigt eine Vorrichtung zum Durchführen von Reaktionen mit einem Objekträger und einem Reagenzträger in denen längliche Adhäsionsflächen Rinnen angebracht sind.

### Aufgabe der Erfindung

Es war ein Weg zu finden, bei immunologischen, histochemischen, molekularbiologischen, enzymologischen, klinisch-chemischen und anderen Analysen, beispielsweise für die medizinische Laboratoriumsdiagnostik, an eine feste Phase gebundene Reaktionspartner mit in Flüssigkeiten gelösten Reaktanden zu inkubieren, wobei die Flüssigkeit der Festphase in einer Weise präsentiert wird, dass sie seitlich nicht verlaufen kann, dass benachbarte Proben während der Inkubation oder während der Waschzyklen nicht miteinander in Kontakt kommen und dass zur Durchmischung der Reaktanden während der Inkubation oder zum effektiven Waschen eine kräftige Konvektion in der Flüssigkeit erzwungen werden kann.

### Beschreibung der Erfindung

Diese Aufgabe wird durch eine Vorrichtung nach Anspruch 1 und ein Verfahren nach Anspruch 12 gelöst. Bevorzugte Ausführungsformen sind Gegenstand der jeweils zugehörigen Unteransprüche.

Es ist vorgesehen, dass eine Vorrichtung zur Durchführung immunologischer, histo- und cytochemischer, molekularbiologischer, enzymologischer, klinisch-chemischer und anderer Analysen einen Objektträger mit einer oder mehreren länglichen, beispielsweise streifenförmigen, Adhäsionsflächen und einen Reagenzträger mit einer oder mehreren länglichen Rinnen aufweist. Der Objektträger kann in der Weise lösbar mit dem Reagenzträger verbunden werden, dass die länglichen Adhäsionsflächen jeweils einer der Rinnen gegenüber liegen und parallel bzw. im wesentlichen parallel zu diesen verlaufen und dann, wenn an eine feste Phase gebundene Reaktionspartner auf den länglichen Adhäsionsflächen angeordnet sind und sich in Flüssigkeit gelöste Reaktanden in den Rinnen befinden, die Reaktionspartner und Reaktanden in Kontakt sind. Es sind Mittel vorgesehen, um ein Übertreten der Flüssigkeit von einer Rinne in eine benachbarte Rinne zu verhindern.. Es ist bevorzugt, dass Objektträger und Reagenzträger Mittel aufweisen, mit deren Hilfe erreicht werden kann, dass der Objektträger und der Reagenzträger im verbundenen Zustand in einer definierten Position relativ zueinander angeordnet sind, d.h. es ist eine definierte seitliche Positionierung und/oder ein definierter Abstand hergestellt. Solche Mittel können zum Beispiel einander zugeordnete Vorsprünge und Vertiefungen, Rastelemente und/oder Anschläge umfassen. Ferner kann es vorteilhaft sein, wenn der Objektträger und/oder der Reagenzträger Mittel aufweisen, die die lösbare Verbindung bewirken können.

Indem verhindert wird, dass die Flüssigkeit während der Analyse zwischen den Rinnen übertritt, können in vorteilhafter Weise in den verschiedenen Rinnen parallel mehrere Proben auf einem Objektträger nebeneinander analysiert werden, ohne dass die Gefahr besteht, dass sich die Flüssigkeiten benachbarter Proben während der Inkubation untereinander vermischen.

Die Adhäsionsflächen können so an der Objektträgeroberfläche angeordnet sein, dass sie plan in Bezug auf diese sind oder dass sie bündig zu ihr sind. Alternativ können zwischen benachbarten Adhäsionsflächen parallel von einem Längsende der Adhäsionsflächen zum anderen verlaufende Nuten, längliche Vertiefungen oder Stufen vorgesehen sein. Auf diese Weise wird in vorteilhafter Weise erreicht, dass die einzelnen Adhäsionsflächen voneinander abgesetzt sind und auf jeweils eigenen, separaten länglichen Vorsprüngen angeordnet sind, d.h. zum Beispiel gewissermaßen erhaben auf der Objektträgeroberfläche angeordnet sind.

Die Rinnen des Reagenzträgers verlaufen in auf der Reagenzträgeroberfläche angeordneten länglichen Vorsprüngen, wobei die Vorsprünge benachbarter Rinnen voneinander getrennt sind. So können zum Beispiel die einzelnen Vorsprünge - und damit die Rinnen - durch parallel zu den Rinnen und zwischen diesen von einen Längsende der Rinnen zum anderen verlaufende Aussparungen oder durch eine spezielle stufenartige Profilierung abgesetzt bzw. getrennt sein.

Die seitlichen Ränder der Rinnen sind oben zugespitzt bzw. mit einer scharfen Kante versehen, und die Flüssigkeit ist im verbundenen Zustand von Objektträger und Reagenzträger daran gehindert, seitlich aus den Rinnen auszutreten. Dies kann in Kombination mit den zugespitzten Rändern zum Beispiel dadurch erreicht werden, dass der Abstand der Ränder von den Adhäsionsflächen des Objektträgers so gering ist, dass die Flüssigkeit durch Adhäsionskräfte von unten und oben in der vorgesehenen Position gegen einen seitlichen Austritt festgehalten wird. Es entsteht gewissermaßen eine "beidseitig geschlitzte Kapillare", aus der Luft seitlich entweichen kann, aber nicht die Flüssigkeit.

In einer bevorzugten Ausführungsform sind die Innenflächen der Rinnen mit einem Profil zur Führung der Flüssigkeit in den Rinnen in Längsrichtung ausgestattet. Ein solches Profil kann beispielsweise eine in Längsrichtung im Rinnenboden verlaufende Nut umfassen.

Zur Erhöhung der Reservoirfunktion für die Flüssigkeit mit dem Zwekke des Auslaufschutzes reichen die Rinnen der Reagenzträger in der Länge über die Längsenden der Adhäsionsflächen der Objektträger hinaus. Mit anderen Worten sind die Rinnen länger als die Adhäsionsflächen, und im verbundenen Zustand von Objekt- und Reagenzträger stehen die Rinnen an einem oder bevorzugt an beiden Enden über die Adhäsionsflächen hinaus vor. Dabei kann es besonders vorteilhaft sein, wenn die Ränder der Rinnen in diesen die Adhäsionsflächen überragenden Teilen nach oben gezogen sind bzw. gegenüber dem Rest der Rinne erhöht sind, um ein napfförmiges Reservoir zu bilden, das überschüssige Flüssigkeit aufnimmt.

Die Rinnen des Reagenzträgers können vorteilhaft hydrophiliert sein, damit sich die Flüssigkeit leichter in die Rinnen einfüllen lässt. Dazu werden bevorzugt in die Rinnen hydrophile Substanzen eingebracht, die die später folgende Reaktion nicht stören.

In einer bevorzugten Ausgestaltung ist um jede Adhäsionsfläche des Objektträgers herum ein umlaufender, gegenüber der Adhäsionsfläche vorspringender Rand vorgesehen. Dieser Rand kann Teil der Adhäsionsfläche sein und deren Rand bilden oder kann außerhalb der Adhäsionsfläche angeordnet sein. Es ist von Vorteil, wenn der Rand so dimensioniert ist, dass er zur Analyse an den Adhäsionsflächen zu befestigende Festphasensubstrate mit daran gebundenen Reaktionspartnern für in der Rinnenflüssigkeit gelöste Reaktanden überragt und bevorzugt gerade so geringfügig überragt, dass bei der späteren Auswertung durch ein auf den Objektträger aufgelegtes Deckglas kein direkter mechanischer Druck auf das Festphasensubstrat ausgeübt wird. In jedem Fall verhindert der Rand dann ein nachteiliges Auslaufen von Eindeckmedium.

Der Objektträger und der Reagenzträger sind bevorzugt so ausgestaltet, dass im verbundenen Zustand von Objektträger und Reagenzträger die Adhäsionsflächen in die Rinnen eintauchen, im Kontaktbereich in Höhe des Rinnenrandes liegen oder über dem Rinnenrand liegen und sich in den Rinnen befindliche Flüssigkeit vor Kontaktaufhahme mit den Adhäsionsflächen oder während des Kontaktes über den Rinnenrand hervorwölbt.

Zur sicheren Identifizierung der Objektträger beim Mikroskopieren und zur sicheren Zuordnung zu den Reagenzträgern bei Beginn der Inkubation können die Objektträger und die Reagenzträger vorteilhaft mit maschinenlesbaren Codes versehen werden.

In einer vorteilhaften Ausgestaltung sind an der Ober- bzw. Innenfläche der Rinnen Schikanen vorgesehen. Wie nachfolgend beschrieben wird, werden Objektträger und Reagenzträger im aneinander befestigten Zustand während der Analyse bzw. der Inkubation bevorzugt so bewegt, dass sich die Flüssigkeit in den Rinnen abwechselnd in der Längsrichtung der Rinnen hin- und herbewegt. Dabei überströmen sie die Schikanen, und an diesen bilden sich Wirbel in der Flüssigkeit, die für eine verbesserte Durchmischung der Flüssigkeit sorgen.

Während der Analyse sind an den Adhäsionsflächen bevorzugt Festphasensubstrate bzw. feste Phasen mit daran gebundenen Reaktionspartnern für in der Rinnenflüssigkeit gelöste Reaktanden angeordnet. Diese Festphasensubstrate können im Zuge der Herstellung der Objektträger oder erst unmittelbar vor der Analyse angeordnet werden. Die Festphasensubstrate weisen bevorzugt biologisches Material auf, das ausgewählt ist aus: a) Dünnschnitten biologischer Gewebe, b) Zellausstrichen auf gewachsenen Zellen oder Zellverbänden, c) Bakterienausstrichen, d) Viren, Protozoen und Parasiten, e) in Lösung aufgetragenen, angetrockneten oder angekoppelten Antigentropfen, f) sonstigen an eine Oberfläche gekoppelten Antigenen und/oder g) beliebigen Nukleotid-Sequenzen.

Eine solche Vorrichtung kann vorteilhaft in einem Verfahren zur Durchführung immunologischer, histo- und cytochemischer, molekularbiologischer, enzymologischer, klinisch-chemischer und anderer Analysen zum Einsatz kommen, bei dem der Objektträger in der oben beschriebenen Weise so mit dem Reagenzträger verbunden wird, dass die länglichen Adhäsionsflächen jeweils einer Rinne gegenüberliegen, Flüssigkeit mit darin gelösten Reaktanden in die Rinnen eingebracht wird, so dass an den Adhäsionsflächen angeordnete Festphasensubstrate mit daran gebundenen Reaktionspartnern in Kontakt mit der Flüssigkeit treten, und Objektträger und Reagenzträger zusammen so bewegt werden, dass die Flüssigkeit sich abwechselnd in die beiden Längsrichtungen der Rinnen bewegt. Nachdem Reaktionspartner und Reaktanden auf diese Weise inkubiert wurden, wird anschließend analysiert bzw. ausgewertet ob - und ggf. in welchem Umfang - eine Reaktion zwischen diesen stattgefunden hat.

Dabei wird die Bewegung bevorzugt so durchgeführt bzw. sind Objektträger und Reagenzträger bevorzugt so ausgestaltet, dass in den Rinnen die Flüssigkeit des Analyseansatzes während der Reaktionszeiten und die Waschflüssigkeit während der Waschzyklen tangential unter den Adhäsionsflächen vorbei strömt.

In einer bevorzugten Ausgestaltung des Verfahrens wird eine kontinuierliche Durchmischung jedes einzelnen Analyseansatzes, d.h. der Flüssigkeit in einer Rinne, während der obigen Bewegung dadurch erzielt, dass der Reagenzträger zusammen mit dem darauf liegenden Objektträger periodisch in Längsrichtung der Rinnen soweit aus der Waagerechten geschwenkt wird, dass die Flüssigkeit in Längsrichtung der Rinnen und beispielsweise zwischen den Enden der Rinnen hin- und herfließt.

Es ist bevorzugt, dass bei der obigen Bewegung eine - bevorzugt kontinuierliche und vollständige - Durchmischung der Flüssigkeit in jeder Rinne dadurch erzielt wird, dass das bei jedem halben Zyklus vom einen Längsende der Reagenzträger-Rinnen zum anderen bewegte Flüssigkeitsvolumen größer ist als das Flüssigkeitsvolumen unter den Adhäsionsflächen. Dadurch wird die Flüssigkeit an den beiden Enden jeder Rinne in die Durchmischung bzw. den ständigen Austausch einbezogen.

Es ist ferner vorteilhaft, wenn das Fassungsvermögen der Rinnen dem für die jeweiligen Analysen erforderlichen Volumen durch Vorgabe der Rinnentiefe angepasst wird.

Im Rahmen des Verfahrens können in vorteilhafter Weise je Analyseansatz ein Festphasensubstrat eingesetzt (Einzeltests) oder mehrere Festphasensubstrate eingesetzt (Mosaik-Test) werden.

Das Verfahren kann für die Bestimmung von Antikörpern in der Diagnostik von Autoimmun- oder Infektionserkrankungen, Allergien und Tumoren verwendet werden, wobei es sich bevorzugt handeln kann um a) Autoantikörper, b) Antikörper gegen Infektionserreger: Bakterien, Viren, Protozoen, Hefen und Parasiten, c) Allergen-spezifische Antikörper der Immunglobulinklassen IgE und IgG, d) Antikörper gegen Tumor-Antigene.

Die Antikörper können in vorteilhafter Weise a) mit der Technik der Direkten oder Indirekten Immunfluoreszenz, b) mit der Immunblot-Technik, darunter unter Verwendung Blot-Membran-basierter Mikroarrays, oder c) mit der Lumineszenztechnik untersucht werden.

Ferner kann das Verfahren in vorteilhafter Weise unter Verwendung der Erfindung zur Genotypisierung von Patienten- oder anderen Proben mit Hilfe von Mikroarrays benutzt werden.

Das Verfahren kann bevorzugt automatisch oder halbautomatisch durchgeführt werden. Dabei werden bevorzugt (a) die für die Untersuchungen vorgesehene Zahl Reagenzträger an einer definierten Position auf einem Schwenktisch platziert, (b) die entsprechende Art und Zahl Objektträger gemäß Inkubationsprotokoll analysegerecht auf die Reagenzträger gelegt, c) geeignete Probenverdünnungen hergestellt und in die vorgesehenen Rinnen der Reagenzträger eingefüllt, d) je nach Protokoll eine oder mehrere Inkubationsschritte vorgenommen, wobei der Schwenktisch in Bewegung gesetzt und eine effektive Durchmischung in den Einzelansätzen bewirkt wird, e) zwischen den einzelnen Inkubationsschritten Waschzyklen eingeschaltet, wobei die Waschflüssigkeit auf der einen Seite der Rinnen eingefüllt und auf der anderen abgesaugt wird, während dessen die Objektträger nicht von den Reagenzträgern heruntergenommen werden müssen, und f) die Resultate der jeweiligen Testvariante entsprechend ausgewertet. Die erfindungsgemäße Vorrichtung ist bevorzugt zur automatischen oder halbautomatischen Anwendung angepasst.

Im folgenden werden Ausführungsbeispiele der Erfindung unter Bezugnahme auf die Figuren näher erläutert.
- Figur 1: stellt schematisch den "Indirekten Immunfluoreszenztest" zum Nachweis von Antikörpern in Patientenserum gemäß Stand der Technik dar.

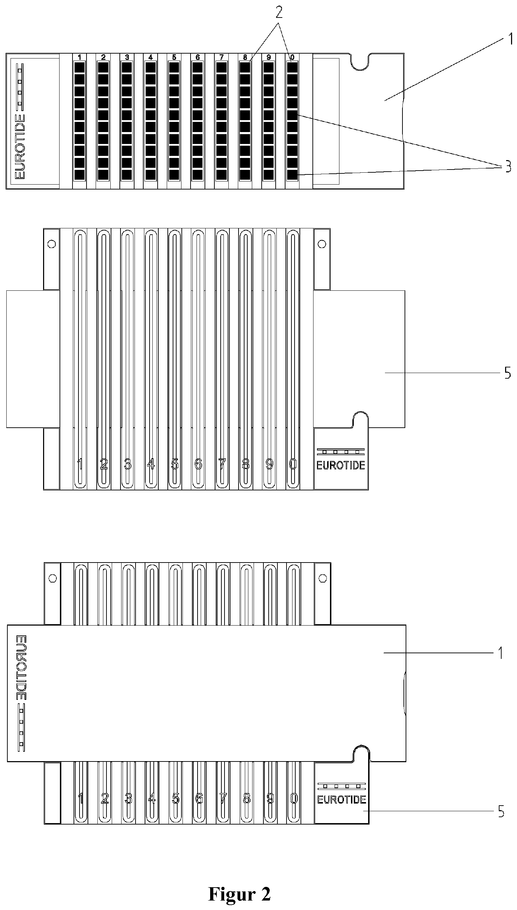

- Figur 2: zeigt ein Ausführungsbeispiel von Objektträger und Reagenzträger gemäß der Erfindung.

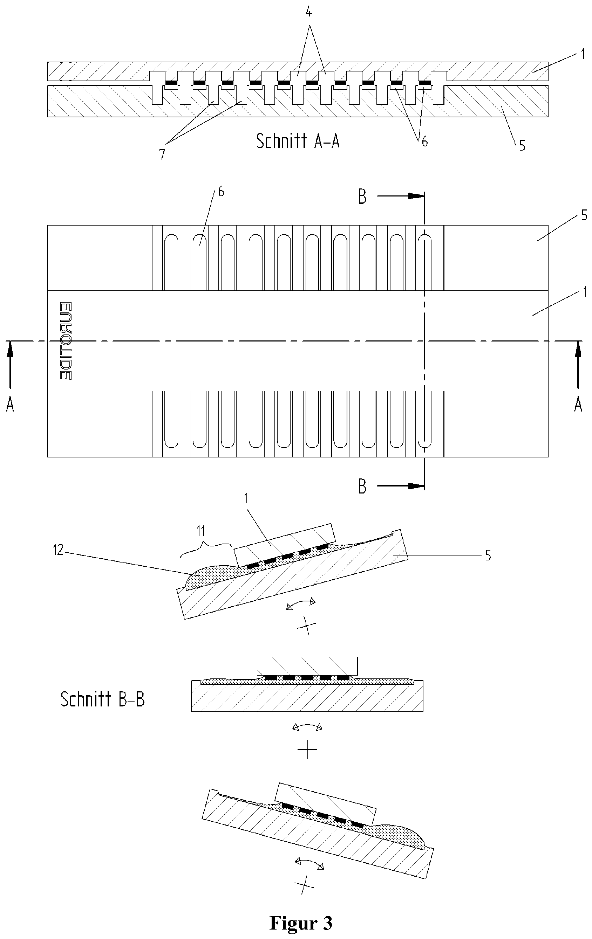

- Figur 3: weitere Details des Ausführungsbeispiels gemäß Figur 2.

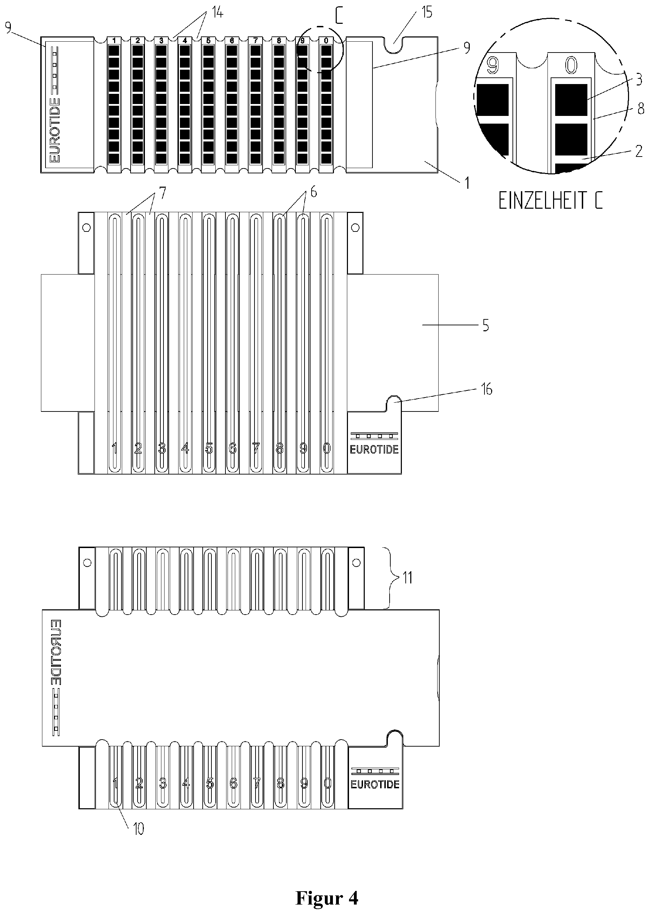

- Figur 4: zeigt ein weiteres Ausführungsbeispiel von Objektträger und Reagenzträger gemäß der Erfindung.

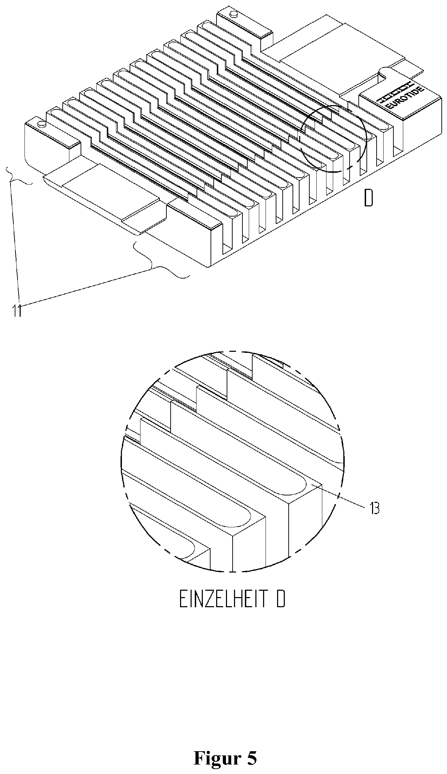

- Figur 5: zeigt ein weiteres Ausführungsbeispiel des Reagenzträgers gemäß der Erfindung.

Es werden Objektträger (1) mit einer oder mehreren länglichen Adhäsionsflächen (2) geschaffen, an denen die Festphasensubstrate (3) befestigt werden. Jede einzelne Adhäsionsfläche kann plan in der Objektträgeroberfläche liegen, oder sie ragt in bevorzugten Versionen der Erfindung hervor, getrennt von den benachbarten Adhäsionsflächen durch parallel vom einen Längsende der Adhäsionsflächen zum anderen verlaufende Nuten (4), zur Abgrenzung benachbarter Reaktionsansätze voneinander. Für die Inkubation werden die Objektträger, mit den Adhäsionsflächen nach unten, auf Reagenzträger (5) mit länglichen Rinnen (6) gelegt und mit diesen vorübergehend zu einem "Block" vereinigt. Die Rinnen liegen den Adhäsionsflächen der Objektträger in exakt definierter Position gegenüber und werden zu gegebener Zeit mit der Probenflüssigkeit oder dem flüssigen Reagenz befüllt. Sie ragen nach oben heraus (in besonderen Ausführungsformen stufenartig) und sind nach den Seiten hin durch eine spezielle Profilierung abgesetzt. So kann der Reagenzträger neben den Rinnen parallel vom einen Längsende zum anderen verlaufende Aussparungen (7) aufweisen, zur Abgrenzung benachbarter Reaktionsansätze voneinander. Die Flüssigkeit der Rinnen wird den Adhäsionsflächen der Objektträger entgegengehoben, sodass eine "beidseitig geschlitzte Kapillare" entsteht, aus der Luft entweichen kann, aber die Flüssigkeit durch Adhäsionskräfte von unten und oben in der vorgesehenen Position festgehalten wird. Die Ränder der Rinnen können oben zugespitzt sein oder mit einer scharfen Kante versehen werden, um die Flüssigkeit daran zu hindern, nach den Seiten hin auszutreten. Die Flüssigkeit kann bei bestimmten Ausführungsformen an den Längsenden der Adhäsionsflächen aus einer Ausbuchtung der Rinne in die Kapillare einfließen oder sie von dort verlassen.

Die Objektträger können vor dem Befüllen der Rinnen mit der Flüssigkeit schon in die für die Inkubation vorgesehene Position gebracht werden, oder die Flüssigkeit wird bereits vorher in die Rinnen gefüllt, und die Objektträger werden erst danach aufgelegt, in diesem Falle starten alle Reaktionen beim Auflegen des Objektträgers gleichzeitig. Die Geometrie jedes Blockes ist so abgestimmt, dass die Festphasensubstrate mit der von den Rinnen gehaltenen Flüssigkeit in Kontakt kommen. In manchen Ausführungsformen tauchen dazu die Adhäsionsfelder in die Rinnen ein, in anderen Ausführungsformen liegen die Adhäsionsfelder in Höhe des Rinnenrandes, in wieder anderen liegen sie höher, und die Flüssigkeit wölbt sich über den Rinnenrand. Es werden Reagenzträger mit unterschiedlichen Rinnentiefen hergestellt, wobei man sich nach dem für die jeweiligen Analysen erforderlichen Volumen richtet. Ebenso kann man die Breite der Adhäsionsflächen und der Rinnen dem Bedarf anpassen.

Das zusammengesetzte Gebilde aus Objektträger und Reagenzträger (Block) kann jetzt rhythmisch durch Wipp-Bewegungen mit beliebiger Frequenz derart gekippt werden, dass die Flüssigkeit vom einen Längsende der Adhäsionsflächen und Rinnen zum anderen, und dann wieder zurück fließt. Zum Abschluss der Inkubation werden die Objektträger von den Reagenzträgern abgenommen und die Reaktionen ausgewertet. Im Falle des Indirekten Immunfluoreszenztests wird Eindeckmedium mit den Antigen-Substraten der Adhäsionsflächen in Kontakt gebracht und je Objektträger ein Deckglas aufgelegt, dann wird mikroskopiert.

Jede Adhäsionsfläche kann einen rundum laufenden Rand (8) aufweisen, der die Substrate nur geringfügig überragt, aber drei wichtige Funktionen erfüllt: Erstens erleichtert der Rand das Positionieren der Substrat-tragenden Glasfragmente (Biochips), die zum Beispiel beim Aufkleben nicht mehr so ohne weiteres unbeabsichtigt verrutschen können. Zweitens schützt der Rand die Substrate: Das zum Schluss aufgelegte Deckglas wird von den Gewebeschnitten oder Zellen auf einen kleinen, definierten Abstand weggehalten und kann sie um so weniger beschädigen, was bei herkömmlichen Techniken des Öfteren vorkommt, wo das Deckglas direkt dem mit Eindeckmedium überzogenen biologischen Material aufliegt. Und drittens wird das Eindeckmedium zwischen Adhäsionsflächen und Deckglas festgehalten und kann nicht herauslaufen: Die Substrate trocknen nicht aus, wodurch sie unbrauchbar würden, und der Kreuztisch des Mikroskops wird nicht verunreinigt. Durch den umlaufenden Rand (8) wird das Deckglas nur soweit angehoben, dass der Arbeitsabstand der gängigen Mikroskop-Objektive von der Frontlinse bis zur Ebene der Gewebeschnitte oder Zellen nicht überschritten wird. Die Oberfläche der Objektträger kann mit Aussparungen (Außenränder der Aussparungen: 9) versehen sein, in die das Deckglas einrasten kann, damit es beim Mikroskopieren seitlich nicht verrutscht.

Im Vergleich zur bereits zitierten EP 0 018 435, bei der sowohl Objektträger wie auch Reagenzträger hydrophile Felder in einer hydrophoben Umgebung für die Positionierung der Flüssigkeit gegenüber dem Festphasensubstrat benötigen, ist bei der hier vorliegenden Erfindung eine hydrophil/hydrophobe Beschichtung der Objektträger oder der Reagenzträger nicht notwendig. Es erweist sich aber als nützlich, die Rinnen der Reagenzträger zu hydrophilieren, damit sich die Flüssigkeit leichter einfüllen lässt, das kann man zum Beispiel durch Aufsprühen hydrophiler (die später folgende Reaktion nicht störender) Substanzen erreichen, die man gegebenenfalls antrocknen lässt. Die Rinnen können mit geeigneten Profilen zur Führung der Flüssigkeit ausgestattet werden, beispielsweise mit einer Rille (10) oder mehreren Rillen am Boden der Rinne, um das Strömungsverhalten beim Befüllen mit Probenflüssigkeit oder Reagenzien und während des Wipp-Vorganges günstig zu beeinflussen. Zur Förderung der Konvektion und dadurch zur Beschleunigung des Mischvorgangs können auch Schikanen in die Oberfläche der Rinnen eingearbeitet werden, an denen sich beim Überströmen Wirbel bilden.

Die Rinnen besitzen an beiden Längsenden Reservoirs für die Flüssigkeit - sind zum Beispiel länger (11) ausgebildet als die Adhäsionsflächen der Objektträger. Die Flüssigkeit läuft dann bei den Wipp-Bewegungen über das Ende der Adhäsionsflächen hinaus (12), und die gewünschte Durchmischung der Probe während der gesamten Inkubation wird noch effizienter, insbesondere, wenn das Flüssigkeitsvolumen der Rinnen im die Objektträger beidseitig überragenden Anteil auf jeder Seite größer ausgelegt wird als das Volumen dazwischen, im Bereich der Adhäsionsflächen. Der überstehende Abschnitt der Rinnen dient des Weiteren als Reservoir zur Aufnahme eines Überschusses an Flüssigkeit, um das System gegen Störungen durch ungenaues Pipettieren abzusichern. An dieser Position werden auch Proben-, Reagenzien- und Waschflüssigkeit eingefüllt und abgesaugt, während die Objektträger auf den Reagenzträgern platziert sind. Die Erfindung eignet sich daher im Vergleich zum gesamten Stand der Technik in besonderem Maße für die automatische Bearbeitung großer Analyseserien. Sie ermöglicht es unter anderem, die Ansätze nach jedem Inkubationsschritt effizient zu waschen, ohne die Objektträger herunterzunehme: An einem Längsende wird Waschflüssigkeit zugegeben, am anderen gleichzeitig abgesaugt. Dabei strömt die Flüssigkeit tangential an den Festphasensubstraten vorbei, was besonders wirksam ist und sowohl den Waschzyklus verkürzt als auch große Volumina an Waschflüssigkeit einspart. Das Waschen kann in Intervallen, oder aber kontinuierlich erfolgen. Während des Waschens im Durchlauf werden die Blöcke aus Reagenzträgern und Objektträgern vorwiegend schräg angekippt, in oder gegen Fließrichtung.

Bisher ist es bei manueller Durchführung des Indirekten Immunfluoreszenztests üblich, die Proben oder Reagenzien mit einem üppigen Schwall Waschflüssigkeit von den Objektträgern abzuspülen, darauf werden die Objektträger nacheinander in zwei oder drei Küvetten mit jeweils frischer Waschflüssigkeit gestellt, dann werden sie herausgenommen und um die Reaktionsfelder herum und auf der Rückseite abgetrocknet, schließlich werden manuell Reagenzien oder Eindeckmedium aufgetropft. Die Objektträger der vorliegenden Erfindung brauchen nicht mehr im Ganzen gewaschen zu werden und kommen nur noch im Bereich ihrer Adhäsionsflächen mit potentiell infektiöser Flüssigkeit in Berührung. Und auf die Adhäsionsflächen wird zum Schluss noch ein Deckglas gelegt, sodass beim Mikroskopieren von den Objektträgern kaum noch eine Infektionsgefahr ausgeht.

Die Rinnen der Reagenzträger stehen über die Objektträger hinaus (11) und ihre Ränder sind nach oben gezogen, um sozusagen einen "Napf" (13) zu bilden, zur Erhöhung der Reservoirfunktion an den Enden und zum Schutz davor, dass die Flüssigkeit herausläuft und vielleicht sogar zum benachbarten Reaktionsansatz übertritt. Als Vorsichtsmaßnahme mit dem gleichen Ziel können auch Einbuchtungen (14) am Objektträgerrand zwischen den Adhäsionsflächen vorgesehen werden. Des Weiteren können außerhalb des Bereichs der Adhäsionsflächen an den Objektträgern Kerben oder Vorsprünge (15) angebracht werden, die mit entsprechenden Gegenstücken (16) der Reagenzträger korrespondieren. Dadurch wird gewährleistet, dass die Objektträger in der richtigen Orientierung aufgelegt werden. An den Enden der Objektträger kann ein Code angebracht werden, oben oder unten, zur sicheren Identifizierung beim Positionieren der Objektträger in den Reagenzträgern zu Beginn der Inkubation oder beim Mikroskopieren. Auf der Unterseite der Objektträger können plane dünne Leisten vorgesehen werden, auf denen die Objektträger beim Mikroskopieren gleiten, dann bleiben sie nicht auf dem Kreuztisch kleben, falls dieser einmal durch Öl oder Eindeckmedium eines Objektträgers des früheren Standes der Technik verunreinigt ist. Die Objektträger können unterseitig an den Enden um wenige Grad angeschrägt werden: Wenn man dort von oben einen geringen Druck mit dem Finger ausübt, kann man die Objektträger ankippen und vom Labortisch oder vom Kreuztisch des Mikroskops leicht abheben.

Die Reaktionen der Indirekten Immunfluoreszenz fallen bei den erfindungsgemäß inkubierten Gewebeschnitten oder Zellsubstraten bemerkenswert reproduzierbar aus, ganz im Gegensatz zur konventionellen Technik: Bei einem herkömmlichen Objektträger liegt ein mehr oder weniger runder Tropfen über dem Substrat, beispielsweise einem Gewebeschnitt. In der Mitte des Feldes ist der Tropfen oft höher als außen, dann sieht man in der Mitte stärkere Reaktionen, da hier mehr Antikörper vorhanden sind. Manchmal findet man aber auch das Umgekehrte: Wo der Tropfen den Rand des Gewebeschnitts überragt, stehen den Antigenen von außen zusätzliche Reaktionspartner zur Verfügung. Oft kann man noch einen weiteren, gravierenden Effekt beobachten: Aufgrund der größeren Krümmung der Oberfläche am Rand des Tropfens verdunstet dort die Flüssigkeit wesentlich schneller als in der Mitte, es strömt kontinuierlich Flüssigkeit auswärts, und es entwickelt sich ein erheblicher Konzentrationsgradient der Antikörper - dann reagiert der Rand des Gewebeschnittes wesentlich stärker als die Mitte, wodurch teilweise über zehnfach zu hohe Antikörper-Konzentrationen vorgetäuscht werden. (Dieses Phänomens kann man jederzeit auch im Alltag beobachten: Auf einer glatten Oberfläche ergibt ein eingetrockneter Tropfen Kaffee einen Fleck, der innen ganz hell, und am Rand fast schwarz ist.) Bei erfindungsgemäß inkubierten Gewebeschnitten zeigen die histologischen Strukturen an jeder Stelle eines Ansatzes gleichstarke Reaktionen. Dieser Fortschritt wurde dadurch erzielt, dass die Reaktanden in der Flüssigkeit während der Inkubationen ständig effektiv gemischt werden - eine besondere Stärke dieser Erfindung, und eine der Voraussetzungen für eine Standardisierung der Immunfluoreszenz-Diagnostik.

Infolge der erzwungenen Konvektion der gelösten Reaktionspartner und der kontinuierlichen vollständigen Durchmischung jedes einzelnen Analyseansatzes erhält man bei der vorliegenden Erfindung des Weiteren im Vergleich zu einem ruhenden System wesentlich stärkere Signale, weil immer die maximale Konzentration der sich in der Flüssigkeit befindlichen Reaktanden am Festphasensubstrat anliegt und auch diejenigen Reaktanden der Flüssigkeit mit den Reaktionspartnern des Festphasensubstrats in Kontakt kommen, die es wegen der zu langen Wegstrecke im Laufe der Inkubation allein durch Diffusion nicht geschafft hätten. Schließlich wird bei erfindungsgemäßer Inkubation die Sättigungsgrenze der Reaktionen schneller erreicht als beim Stand der Technik, weshalb die Inkubationszeit zum Beispiel für die Indirekte Immunfluoreszenz um ein Drittel verkürzt werden kann.

### Beispiele

Eine der wichtigsten Anwendungen für die neue Erfindung ist die serologische Diagnostik von Antikörpern durch indirekte Immunfluoreszenz in der Labormedizin. Das neue Verfahren und die entsprechenden Vorrichtungen eignen sich aber auch zur Durchführung vieler anderer immunologischer, histo- und cytochemischer, molekularbiologischer, enzymologischer, klinisch-chemischer und anderer Analysen, für Untersuchungen unter Verwendung von Immunblots, Microarrays oder für fluorometrische und luminometrische und andere Analyseverfahren, beispielsweise in der medizinischen Laboratoriumsdiagnostik, bei denen an eine feste Phase gebundene Reaktionspartner mit in Flüssigkeiten gelösten Reaktanden inkubiert werden. Ebenso für die Direkte Immunfluoreszenz.

### Beispiel 1: Nachweis von Autoantikörpern gegen Granulocyten durch Indirekte Immunfluoreszenz in der Diagnostik der Wegener'sehen Granulomatose

Für Einzelanalysen bestückt man jede Adhäsionsfläche eines Objektträgers mit je einem Substrat. Dazu werden in diesem Fall isolierte Granulocyten auf einem Deckglas ausgestrichen und 10 Minuten lang in 96% Ethanol bei Zimmertemperatur fixiert. Danach wird das Deckglas mit Hilfe eines Glaserdiamanten in 1 x 1 Millimeter-große Fragmente unterteilt. Je eines dieser Fragmente wird auf je eine von 10 Adhäsionsflächen des Objektträgers geklebt (der Klebstoff befindet sich zwischen Adhäsionsfläche und Unterseite des Biochips, die Granulocyten liegen frei an der Oberfläche). Der Objektträger wird, mit den Biochips nach unten, auf einen Reagenzträger mit zehn, den Adhäsionsflächen gegenüberliegenden Rinnen gelegt. Der Objektträger ist 26 Millimeter breit, die Adhäsionsflächen 24 Millimeter lang. Die Rinnen stehen an beiden Längsenden der Adhäsionsflächen um jeweils 10 Millimeter über.

Jetzt werden von Hand mit einer Pipette jeweils 100 Mikroliter 1:10 in PBS (einer wässrigen und mit Phosphat auf pH 7,4 gepufferten physiologischen Kochsalzlösung) verdünntes Serum zehn verschiedener Patienten in die zehn Rinnen eingefüllt. Die Rinnen sind derart dimensioniert, dass jetzt die Flüssigkeit Kontakt mit den Granulocyten bekommt. Dann wird der Reagenzträger zusammen mit dem darauf liegenden Objektträger periodisch in Längsrichtung der Rinnen um 30 ° aus der Waagerechten geschwenkt, sodass die Flüssigkeit von einem Ende zum anderen hin und her fließt, mit einer Taktzeit von 15 Sekunden je Zyklus. Das Volumen im Bereich der Adhäsionsflächen beträgt jeweils 20 Mikroliter, das bei jedem halben Zyklus bewegte Volumen ist so ausgelegt, dass es deutlich größer ist, hier 30 Mikroliter, wodurch die Flüssigkeit an den beiden Enden der Rinnen jedes einzelnen Testansatzes in den ständigen Austausch einbezogen wird, und es zu einer kräftigen und schnellen ständigen Durchmischung des gesamten Ansatzes jeder Probe kommt. Während der Inkubationen wird der Block aus Reagenzträger und Objektträger mit einer Haube abgedeckt, damit die Flüssigkeit nicht zu schnell verdunstet und die Analyseansätze nicht eintrocknen.

Nach 30 Minuten wird die Serumverdünnung vom einen Ende der Rinnen her abgesaugt, vom (vorzugsweise, aber nicht ausschließlich) anderen Ende her wird zum Waschen PBS einpipettiert - in 5 Minuten zusammen 10 Milliliter je Rinne. Die Rinnen werden dann leer gesaugt und 100 Mikroliter einer geeigneten Verdünnung eines Fluorescein-markierten Antihuman-Immunglobulins von der Ziege eingefüllt (viele andere Antikörperquellen oder Antikörperähnliche Reaktanden sind hier denkbar, aber auch viele andere Markierungssubstanzen). Das Reagenz bekommt dabei wieder Kontakt mit den Adhäsionsflächen und den darauf fixierten Antigen-Substraten. Der Block aus Reagenzträger und Objektträger wird eine weitere halbe Stunde geschaukelt, danach wird erneut, in gleicher Weise, gewaschen. Zum Schluss werden die Rinnen wieder leer gesaugt, der Objektträger vom Reagenzträger genommen, auf die Adhäsionsflächen je 15 Mikroliter Eindeckmedium (mit PBS auf pH 8,4 gepuffertes Glycerin 1:10, unter Zusatz von 0,1% Natriumazid und 2% 1,4-Diazabicyclo[2.2.2]octan als Ausbleichschutz) aufgetropft und ein Deckglas aufgelegt, das in einer entsprechenden Aussparung an den Rändern des Objektträgers einrastet. Die Reaktionen werden unter dem Fluoreszenzmikroskop begutachtet.

### Beispiel 2: Nachweis von Autoantikörpern gegen Zellkerne, Mitochondrien und glatte Muskeln durch Indirekte Immunfluoreszenz in der Diagnostik verschiedener Rheumaerkrankungen

Auf jede von zehn Adhäsionsflächen eines erfindungsgemäßen Objektträgers (beispielsweise mit den Standardmaßen 76 x 26 Millimeter) werden ähnlich dem ersten Beispiel beschichtete Glasfragmente (Biochips) aufgeklebt, hier aber als ein "Mosaik", mit folgenden Substraten: Azeton-fixierte humane Epithelzellen aus der Zellkultur, Ethanol-fixierte Ausstriche des Hämoflagellaten Crithidia luciliae, unfixierte Gefrierschnitte der Rattenorgane: Leber, Niere, Magen, darüber hinaus Biochips, die flächig oder punktförmig (gemäß Proost et al. ⁷) mit folgenden Einzelantigenen beschichtet sind: Doppelstrang-DNS, Histon H1, den weiteren Zellkernantigenen Sm, RNP, SS-A, SS-B, Scl-70 und Nukleosomen sowie mit dem cytoplasmatischen Antigen Jo-1 - zusammen je Adhäsionsfläche mit 15 verschiedenen Antigen-Substraten. Inkubation und Auswertung erfolgen in gleicher Weise wie im Beispiel 1, parallel für die zehn Patienten des Objektträgers. Man erfährt am Ende der Untersuchung, ob im Serum jedes dieser Patienten einer oder mehrere aus einem Spektrum von mindestens 15 verschiedenen Autoantikörpern vorliegt oder nicht. Die Anordnung der Substrate auf den Adhäsionsflächen und die Inkubation im Zusammenwirken mit den Rinnen des Reagenzträgers erlaubt es, diese Vielzahl an Parametern für zehn Patienten nebeneinander durchzuführen, es sind 150 Einzelanalysen auf einem einzigen Objektträger! Da die Flüssigkeit zwischen den benachbarten Proben nicht verlaufen kann, sind sich unabsichtlich überkreuzende Reaktionen und entsprechende Fehldiagnosen nahezu ausgeschlossen.

Jedes anspruchsvolle medizinische Laboratorium ist daran interessiert, Autoantikörper-Profile untersuchen zu können. Es gibt viele klinische Fragestellungen, bei denen das differentialdiagnostisch sinnvoll ist: Einerseits kommen bei manchen klinischen Syndromen jeweils mehrere Autoimmunkrankheiten in Frage (bei einer Nephritis (Nierenentzündung) zum Beispiel ein Goodpasture-Syndrom, die Wegener'sche Granulomatose, ein Systemischer Lupus erythematodes oder eine Rapid-progressive Glomerulonephritis), andererseits können mit einer bestimmten Autoimmunkrankheit mehrere Autoantikörper korreliert sein (mit einer Primärbiliären Leberzirrhose etwa Antikörper gegen Mitochondrien oder gegen Nuclear Dots, gp210 und PML, mit einem Systemischen Lupus erythematodes Antikörper gegen nDNS, Sm, Histone, Ribosomale P-Proteine, Proliferating Cells' Nuclear Antigen, Cardiolipin, Beta-2-Glycoprotein usw., mit einer Autoimmunthyreoiditis Antikörper gegen Schilddrüsen-spezifische Peroxidase, Thyreoglobulin, TSH-Rezeptoren und Belegzellen des Magens). Die vorliegende Erfindung ist besonders geeignet, Antikörper-Profile zu erstellen. Das beschränkt sich nicht auf die Autoimmundiagnostik, es gibt viele andere Anwendungsgebiete, unter anderem das Screenen monoklonaler Antikörper (zum Beispiel gegen Tumor-assoziierte Antigene) in Fusionsüberständen ⁸ oder die Infektions-Serologie, wie ein analoges Beispiel zeigt:

### Beispiel 3: Parallele Inkubation von 50 Objektträgern mit je 10 Adhäsionsflächen zum Nachweis humaner Antikörper gegen Bakterien, Viren, Protozoen, Hefen und Parasiten durch Indirekte Immunfluoreszenz - 40 Parameter je Patient

Die Objektträger mit den Festphasen-Substraten werden ähnlich wie im Beispiel 2 hergestellt, allerdings werden hier Glasfragmente mit folgenden Infektions-Antigen-Substraten eingesetzt: Masern-, Mumps-, Röteln- und mit beliebigen anderen Viren infizierte Kulturzellen, alle möglichen Bakterien- oder Pilz-Ausstriche, Gefrierschnitte von Echinokokkenlarven, Toxoplasma-gondii-Ausstriche, aber ebenso Oberflächen mit definierten, biochemisch mehr oder weniger rein isolierten, teilweise mit rekombinanten Techniken hergestellten Antigenen. Die Inkubationen werden von einem Automaten unterstützt, der die Patientenseren verdünnt, die Serum-Verdünnungen und die Reagenzien zu gegebener Zeit in die Rinnen der Reagenzträger einfüllt und die Waschprozeduren mit Hilfe Kamm-artiger zehnkanalig ausgelegter Pipetten und Absaugkanülen parallel bewerkstelligt.

Während der Inkubationen und teilweise auch während des Waschens werden alle Blöcke aus Reagenzträgern mit ihren zugehörigen Objektträgern rhythmisch von einem zum anderen Längsende der "gespaltenen Kapillare" und zurück gekippt, um für die gewünschte Konvektion zu sorgen. Die Kipp-Bewegung wird gegebenenfalls (nur) bei denjenigen Blöcken angehalten, bei denen gerade Pipettier- oder Waschvorgänge vorgenommen werden. Dadurch ist gewährleistet, dass der Mischvorgang nicht ständig für den Gesamtansatz unterbrochen werden muss. Es ist ebenso denkbar, dass die gesamte Vorrichtung, einschließlich der Pipettieranlage, auf einem großen Kipptisch angebracht ist, sodass auch diejenigen Blöcke, bei denen gerade Pipettier- und Waschaktionen ablaufen, keine Pause beim Wippen einlegen müssen. Das Eindecken erfolgt (vorerst noch) manuell, das Ablesen am Mikroskop (vorerst noch) visuell.

### Beispiel 4: Untersuchung spezifischer IgE- oder IgG-Antikörper mit einem Blot-Membranbasierten Mikroarray in der Allergie-Diagnostik

Bei der Immunblot-Technik werden Proteine oder andere Antigene auf Nitrozellulose-, Nylon- oder anderen Membranen immobilisiert, die dann nacheinander mit Patienten- oder anderen Proben, enzymmarkierten Antikörpern und einem Farbreagenz inkubiert werden. Positive Reaktionen stellen sich auf den Membranstreifen als Farbniederschläge dar, die visuell oder automatisch mit Scanner- oder Kamerasystemen ausgewertet werden ^{9, 10}.

Auf jede der zehn Adhäsionsflächen eines Objektträgers gemäß der vorliegenden Erfindung werden in drei parallelen Reihen 3 x 26 quadratische Membranchips mit einer Kantenlänge von 1 Millimeter aufgeklebt. Jeder Membranchip enthält ein definiertes Membran-gekoppeltes Allergen (Birkenpollen, Wespengift und so weiter). Die Inkubationen erfolgen ähnlich wie in den vorangegangenen Beispielen, allerdings wird im zweiten Inkubationsschritt ein Enzymmarkierter Antihuman-IgE-Antikörper eingesetzt, woran sich noch ein Waschschritt und eine Indikator-Reaktion anschließen. Im positiven Fall schlägt sich ein Farbstoff auf dem Membranchip nieder.

Man erhält auf einem einzigen Objektträger von 76 cm x 26 cm für zehn Patienten je ein Allergie-Profil mit 78 Parametern. Der erfindungsgemäße Einsatz von Membranchips beschränkt sich nicht allein auf die Allergiediagnostik.

### Beispiel 5: Genotypisierung von Patientenproben mit Hilfe von Mikroarrays

Auf den Adhäsionsflächen eines Objektträgers gemäß der vorliegenden Erfindung werden jeweils mehrere, spezifische Nukleotid-Sequenzen tragende Mikroarrays befestigt, beispielsweise fünf Mikroarrays mit jeweils 50 unterschiedlichen Oligonucleotid-Spots ^{11, 12}. Aus den weißen Blutkörperchen von zehn Patienten wird DNS extrahiert. Daraus werden mittels Multiplex-PCR vorher festgelegte Zielsequenzen amplifiziert und Genotyp-spezifisch markiert. Zur Hybridisierung werden sie in die Rinnen eines Reagenzträgers gemäß der Erfindung eingefüllt und mit den Mikroarrays auf den Adhäsionsflächen der Objektträger in Kontakt gebracht. Abschließend erfolgt die Auswertung der Reaktionen mit einem speziellen Mikroarray-Scanner.

Gerade die molekularbiologische Untersuchung kleinster Mengen Nucleinsäure mit Mikroarrays setzt voraus, dass die Reaktionen eindeutig, reproduzierbar und sehr sensitiv sind, was besonders durch das ständige effektive Mischen der Reaktionsflüssigkeit während der Inkubationen gewährleistet wird, in erster Linie infolge der erzwungenen Konvektion. Auch hier profitiert die Diagnostik hinsichtlich der kurzen Inkubationszeiten von dieser Erfindung.

### Automatisierbarkeit der Erfindung

Bis heute ist die Indirekte Immunfluoreszenz in der Laborpraxis eine Domäne der individuellen manuellen Bearbeitung und visuellen Auswertung. Der Stand der Analysetechnik auf diesem Gebiet hat es nicht hergegeben, Automatisierungslösungen mit hohem Probendurchsatz zu schaffen, wie etwa für die Klinische Chemie. Das Dilemma lässt sich an zwei am Markt verfügbaren Systemen demonstrieren: Die Firma DAS srl (Rom, Italien) bietet einen Inkubationsautomaten an (AP16 IF Plus) und die Firma Menarini srl (Florenz, Italien) ebenfalls (Zenit SP Plus). Beide Systeme pipettieren die Inkubationslösung direkt auf die Felder der Objektträger. Dabei kann es durch ein Zusammenlaufen der Flüssigkeitstropfen nebeneinander liegender Felder zu Fehldiagnosen kommen, besonders wenn die Objektträgeroberfläche nach dem ersten Waschschritt außerhalb der Reaktionsfelder benetzt wurde - bei der vorliegenden Erfindung sind die benachbarten Proben dagegen sicher voneinander getrennt. Sie bietet bessere Voraussetzungen für eine Automatisierung gegenüber vorhandenen Systemen, bei denen man die Pipettier- und Waschvorgänge wegen der Störanfälligkeit ständig im Auge haben muss.

Des Weiteren werden bei beiden Geräten die Flüssigkeiten direkt auf die Felder der Objektträger pipettiert, das kann bei schlechter Justierung zu einer Beschädigung der Substrate durch die Kanülen führen - bei der vorliegenden Erfindung ist das ausgeschlossen, weil die Festphasensubstrate nicht mit den Kanülen in Berührung kommen: Die Flüssigkeit wird außerhalb der Objektträger in die Rinnen gefüllt, die den Substraten noch dazu gegenüber liegen.

Das "AP16 IF Plus" wäscht jedes Feld separat mit einem 2-Kanülen-System. Eine Kanüle dispensiert ein definiertes Volumen Waschlösung als Tropfen auf das zu waschende Feld, die andere saugt diesen Tropfen direkt im Anschluss wieder ab. Dieser Vorgang wird mehrfach wiederholt. Alternativ ist auch ein kontinuierliches Waschen, das heißt gleichzeitiges Dispensieren und Absaugen für einen definierten Zeitraum vorgesehen. Beide Varianten bergen die Gefahr des Kanülenkontaktes mit dem Substrat. Außerdem verbraucht dieses System unnötig viel Waschpuffer, weil ein großer Teil der Spülflüssigkeit nur an den Substraten vorbeiläuft und gar keinen Kontakt mit ihnen bekommt - im Gegensatz zur Erfindung, wo das gesamte Waschvolumen zwangsläufig durch einen schmalen Spalt genau an den Substraten vorbeigeführt wird. Nach jedem Waschschritt bleibt beim "AP16 IF Plus" ein nennenswertes Restvolumen Waschpuffer auf dem Substrat zurück, unter anderem, weil die Absaugkanüle zum Substrat einen Sicherheitsabstand einhalten muss. Dadurch wird die Reagenzienflüssigkeit in unübersehbarer Weise verdünnt, einmal mehr, einmal weniger, was sich nachteilig auf die Präzision der Analysen auswirkt.

Das Waschverfahren des "Zenit SP Plus" nimmt Kreuzkontaminationen bewusst in Kauf: Jeder Objektträger befindet sich in einem Kompartiment einer Schale. Zunächst werden vor dem Waschen Probenflüssigkeit oder Reagenz von den Reaktionsfeldern jedes Objektträgers mit mehreren Kanülen gleichzeitig abgesaugt (Kanülenbalken). Anschließend wird das gesamte Kompartiment mit Waschpuffer befüllt, so dass ein Waschen ähnlich wie in einer Küvette stattfindet. (Diese Vorgehensweise ist gefährlich: Manche hochtitrige und reaktive Antikörper werden durch die erste Waschfüllung nicht ausreichend verdünnt und können unter diesen Umständen bei benachbarten Reaktionsfeldern falsch positive Reaktionen hervorrufen.) Abschließend wird das Kompartiment mit den Kanülen wieder leer gesaugt. Auch hier besteht das Risiko einer Beschädigung der Gewebeschnitte durch die Kanülen. Da die gesamte Oberfläche des Objektträgers mit Waschflüssigkeit in Berührung kommt, verbleibt mehr Restfeuchtigkeit auf dem Objektträger, was ein unkontrollierbares Ineinanderlaufen der im folgenden Inkubationsschritt aufgetragenen Tropfen benachbarter Reaktionsfelder begünstigt (nach Kontakt mit einer Lösung aus Serumproteinen verliert sich die Hydrophilie einer Objektträger-Beschichtung). Auch hier wird die im zweiten Schritt aufgetragene Reagenzlösung durch restliche Waschflüssigkeit zu stark verdünnt.

Die vorliegende Erfindung ermöglicht dagegen ein Flüssigkeit-sparendes automatisches Waschen mit einer hohen Effizienz und Qualität, vermeidet aber die o.g. Risiken der beiden diskutierten Geräte. Die Art der Anordnung der Festphasensubstrate und deren Inkubation in den Rinnen des Reagenzträgers ermöglicht ein paralleles Waschen der Felder streng separat voneinander. Beim Zuführen und Absaugen der Waschlösung über die Rinnen des Reagenzträgers bekommen die Kanülen keinen Kontakt mit den Gewebeschnitten. Außerdem werden nur die Adhäsionsflächen, und nicht die übrige Oberfläche des Objektträgers beim Waschen benetzt, was das Risiko des Zusammenlaufens der Flüssigkeiten benachbarter Felder zusätzlich reduziert. Das Waschpuffer-Restvolumen nach dem Absaugen kann aufgrund der Rinnenform auf ein Minimum reduziert werden, dadurch wird die Reagenzlösung nicht unnötig und von Probe zu Probe unterschiedlich stark verdünnt wie bei den beiden beschriebenen Automaten des Standes der Technik.

### Literatur

1. Stöcker W. Vorrichtung zur Durchführung von Mikroanalysen. Europäisches Patent EP 0 018 435 und USA-Patent US 4 339 241 (1979).
2. Stöcker, W. **Verfahren und Vorrichtungen für Untersuchungen an unbeweglich gemachtem biologischem Material.** Europäisches Patent EP 0 117 262 und USA-Patent US 4 647 543 (1983).
3. Stöcker W, Scriba PC. Die Anwendung einer neuen, rationellen Immunfluoreszenztechnik in der klinischen Routinediagnostik. In: Schatz, H., Doniach, D. (Hrsg.): Autoimmunität bei Schilddrüsenerkrankungen. Georg-Thieme-Verlag Stuttgart 157-174 (1984).
4. Stöcker W. Rationelle Histochemie mit einer neuen Mikroanalysemethode. Acta Histochem Suppl 31: 269-281 (1985).
5. Stöcker W, Otte M, Ulrich S, Normann D, Finkbeiner H, Stöcker K, Jantschek G, Scriba PC. Autoimmunity to pancreatic juice in Crohn's disease. Results of an autoantibody screening in patients with chronic inflammatory bowel diseases. Scand J Gastroenterol Suppl. 139:41-52 (1987).
6. Stöcker W, Rateike M, Morrin M. Verfahren zur Herstellung Festphasengebundener Bioreagenzien**.** Europäische Patentanmeldung PCT/EP/2005/000974 (2005).
7. Proost S, Schlumberger W, Meyer W, Dähnrich C, Müller-Kunert E, Sonnenberg K, Stöcker W. EUROPLUS - Eine BIOCHIP-Kombination aus Gewebeschnitten und Einzelantigenen für die indirekte Immunfluoreszenz: Endomysium /Gliadin, AMA/M2 und Parietalzellen/Intrinsic-Faktor. J Lab Med 20: 670 (1996).
8. Stöcker W, Poschmann A, Seitz C, Heise R, Hornof B, Böcker W. Rationelles Screening von Fusionsüberständen zum histochemischen Nachweis monoklonaler Antikörper gegen Tumor-assoziierte und andere Antigene. Verh Dtsch Ges Path 70: 393-395 (1986).
9. Meyer W, Scheper T, Lehmann H, Stöcker W. EUROIMMUN Medizinische Labordiagnostika AG. Selbstklebende Blotmembranen**.** Eingetragenes deutsches Gebrauchsmuster DE 202 15 268.5 (2003).
10. Meyer W, Scheper T, Stöcker W. EUROIMMUN Medizinische Labordiagnostika AG. Vorrichtung zur Antikörperdiagnose mit kombinierten Membranen**.** Eingetragenes deutsches Gebrauchsmuster DE 202 15 270.7 (2003).
11. Pfeiffer T, Gruber R, Kuon W, Plischke H, Kirsch S, Körner D, Zieseniss S, Schattenkirchner M, Stöcker W, Steller U. Diagnostic microarray assay for SNP-typing of the gene encoding the drug metabolising enzyme arylamine N-acetyltransferase 2 (NAT2). Tagungshandbuch zum DECHEMA Statuseminar Chiptechnologien 90 (2007).
12. Steller U, Stöcker W. Verfahren zur Erzeugung perfekter Macro- und Microarrays durch Kombinieren vorselektierter beschichteter Festphasen-Fragmente (BMBF)**.** Deutsche und Europäische Patentanmeldung (Offenlegungsschrift) DE 10 20006 027 517.9 und PCT/EP2007/004641 bzw. WO2007140889 (2007).

## Patentansprüche

1. Vorrichtung zur Durchführung immunologischer, histo- und cytochemischer, molekularbiologischer, enzymologischer, klinisch-chemischer und anderer Analysen, umfassend
einen Objektträger (1) mit wenigstens zwei länglichen Adhäsionsflächen (2) und einem daran befestigten Festphasensubstrat, und
einen Reagenzträger (5) mit wenigstens zwei länglichen Rinnen (6),
wobei Mittel (11, 13, 14) vorgesehen sind, um ein Übertreten der Flüssigkeit von einer Rinne in eine benachbarte Rinne zu verhindern,
**dadurch gekennzeichnet, dass**
Mittel vorgesehen sind, mit deren Hilfe der Objektträger (1) und der Reagenzträger (5) im verbundenen Zustand in einer definierten Position relativ zueinander angeordnet sind,
der Objektträger (1) lösbar so mit dem Reagenzträger (5) verbunden werden kann, dass jeweils eine der länglichen Adhäsionsflächen (2) jeweils einer der Rinnen (6) gegenüber liegt, und dass in der Weise Festphasensubstrat auf den länglichen Adhäsionsflächen (2) angeordnet und eine Flüssigkeit mit darin gelösten Reaktanden in den Rinnen (6) angeordnet werden können, dass Festphasensubstrat und Reaktanden im verbundenen Zustand von Objektträger (1) und Reagenzträger (5) in Kontakt sind,
dass die Rinnen der Reagenzträger in der Länge über die Längsenden der Adhäsionsflächen der Objektträger hinaus reichen
und dass die Ränder der Rinnen im die Adhäsionsflächen überragenden Teil nach oben gezogen sind.

2. Vorrichtung nach Anspruch 1, bei der zwischen benachbarten Adhäsionsflächen parallel von einem Längsende der Adhäsionsflächen zum anderen verlaufende Nuten (4) oder Stufen vorgesehen sind.

3. Vorrichtung nach einem der vorhergehenden Ansprüche, bei der die Rinnen des Reagenzträgers in auf der Reagenzträgeroberfläche angeordneten länglichen Vorsprüngen verlaufen, wobei die Vorsprünge benachbarter Rinnen voneinander getrennt sind.

4. Vorrichtung nach einem der vorhergehenden Ansprüche, bei der die seitlichen Ränder der Rinnen oben zugespitzt sind und die Flüssigkeit im verbundenen Zustand von Objektträger und Reagenzträger daran gehindert ist, seitlich aus den Rinnen auszutreten.

5. Vorrichtung nach einem der vorhergehenden Ansprüche, bei der die Innenfläche der Rinnen mit einem Profil zur Führung der Flüssigkeit in den Rinnen in Längsrichtung ausgestattet sind.

6. Vorrichtung nach einem der vorhergehenden Ansprüche, bei der zur Erhöhung der Reservoirfunktion für die Flüssigkeit mit dem Zwecke des Auslaufschutzes die Rinnen der Reagenzträger in der Länge über die Längsenden der Adhäsionsflächen der Objektträger hinaus reichen (10).

7. Vorrichtung nach Anspruch 6, bei der die Ränder der Rinnen im die Adhäsionsflächen überragenden Teil nach oben gezogen sind, um ein napfförmiges Reservoir (13) zu bilden, das überschüssige Flüssigkeit aufnimmt.

8. Vorrichtung nach einem der vorhergehenden Ansprüche, bei der um jede Adhäsionsfläche des Objektträgers ein rundum laufenden, gegenüber der Adhäsionsfläche vorspringender Rand (8) vorgesehen ist.

9. Vorrichtung nach einem der vorhergehenden Ansprüche, bei der in der Ober¬fläche der Rinnen Schikanen vorgesehen sind, an denen sich beim Überströmen von Flüssigkeit Wirbel in der Flüssigkeit bilden.

10. Vorrichtung nach einem der vorhergehenden Ansprüche, bei der Festphasensubstrate mit daran gebundenen Reaktionspartnern an den Adhäsionsflächen befestigt sind.

11. Vorrichtung nach Anspruch 10, bei der die Festphasensubstrate biologisches Material aufweisen, das ausgewählt ist aus:
a) Dünnschnitten biologischer Gewebe,
b) Zellausstrichen oder Zellverbänden,
c) Bakterienausstrichen,
d) Viren, Protozoen und Parasiten,
e) in Lösung aufgetragenen, angetrockneten oder angekoppelten Antigentropfen,
f) sonstigen an eine Oberfläche gekoppelten Antigenen und/oder
g) beliebigen Nukleotid-Sequenzen.

12. Verfahren zur Durchführung immunologischer, histo- und cytochemischer, molekularbiologischer, enzymologischer, klinisch-chemischer und anderer Analysen, **dadurch gekennzeichnet, dass** eine Vorrichtung nach einem der Ansprüche 1 bis 11 verwendet wird.

13. Verfahren nach Anspruch 12, bei dem eine kontinuierliche Durchmischung jedes einzelnen Analyseansatzes dadurch erzielt wird, dass der Reagenzträger zusammen mit dem darauf liegenden Objektträger periodisch in Längsrichtung der Rinnen soweit aus der Waagerechten geschwenkt wird, dass die Flüssigkeit von einem Ende zum anderen hin und her fließt.

14. Verfahren nach Anspruch 12 oder Anspruch 13, bei dem eine Durchmischung der Flüssigkeit in jeder Rinne dadurch erzielt wird, dass das bei jedem halben Zyklus vom einen Längsende der Reagenzträger-Rinnen zum anderen bewegte Flüssigkeitsvolumen größer ist als das Flüssigkeitsvolumen unter den Adhäsionsflächen, wodurch die Flüssigkeit an den beiden Enden jeder Rinne in die Durchmischung einbezogen wird.

## Claims

1. Device for performing immunological, histochemical and cytochemical, molecular-biological, enzymological, clinical-chemical and other analyses, comprising:
an object holder (1) having at least two elongate adhesive surfaces (2) and a solid-phase substrate secured thereto, and
a reagent holder (5) having at least two elongate channels (6),
where means (11, 13, 14) are provided for preventing the liquid from passing from one channel to an adjacent channel,
**characterized in that**
means are provided which help to arrange the object holder (1) and the reagent holder (5) in a defined position relative to one another in the connected state,
the object holder (1) is detachably connectable to the reagent holder (5) in such a manner that a respective one of the elongate adhesive surfaces (2) faces a respective one of the channels (6), and **in that** solid-phase substrate can be arranged on the elongate adhesive surfaces (2) and **in that** a liquid with reactants dissolved therein can be arranged in the channels (6), such that in the connected state of object holder (1) and reagent holder (5) solid-phase substrate and reactants are in contact,
**in that** the channels of the reagent holders extend in length beyond the longitudinal ends of the adhesive surfaces of the object holders
and **in that** the edges of the channels extend upwards in the section extending beyond the adhesive surfaces.

2. Device according to Claim 1, wherein between adjacent adhesive surfaces grooves (4) or steps extending in parallel from one longitudinal end of the adhesive surfaces to the other are provided.

3. Device according to any of the preceding claims, wherein the channels of the reagent holder extend in elongate projections arranged on the surface of the reagent holder, wherein the projections of adjacent channels are separated from each other.

4. Device according to any of the preceding claims, wherein the lateral edges of the channels are tapered at the top and, in the connected state of object holder and reagent holder, the liquid is prevented from laterally exiting from the channels.

5. Device according to any of the preceding claims, wherein the interior surface of the channels is provided with a pattern for conducting the liquid within the channels in the longitudinal direction.

6. Device according to any of the preceding claims, wherein for increasing the reservoir function for the liquid with the purpose of leak protection the channels of the reagent holders extend in length beyond the longitudinal ends of the adhesive surfaces of the object holder (10).

7. Device according to Claim 6, wherein the edges of the channels extend upwards in the section extending beyond the adhesive surfaces in order to form a cup shaped reservoir (13) that receives excess liquid.

8. Device according to any of the preceding claims, wherein around each adhesive surface of the object holder a circumferentially extending border (8) is provided that projects with respect to the adhesive surface.

9. Device according to any of the preceding claims, wherein obstacles are provided in the surface of the channels at which obstacles turbulence is formed when liquid flows over them.

10. Device according to any of the preceding claims, wherein solid phase substrates having reaction partners bound thereto are attached to the adhesive surfaces.

11. Device according to Claim 10, wherein the solid phase substrates comprise biological material that is selected from:
a) thin sections of biological tissue,
b) cell streaks or united cell structures,
c) bacteria streaks,
d) viruses, protozoa and parasites,
e) antigen drops applied in solution, dried or coupled,
f) other antigens coupled to a surface and/or
g) any nucleotide sequences.

12. Method for performing immunological, histochemical and cytochemical, molecular-biological, enzymological, clinical-chemical and other analyses, **characterized in that** a device according to any of Claims 1 to 11 is used.

13. Method according to Claim 12, wherein a continuous mixing of each individual analysis preparation is achieved by periodically pivoting the reagent holder together with the object holder lying on it in the longitudinal direction of the channels as far out of the horizontal that the liquid flows back and forth from one end to the other.

14. Method according to Claim 12 or Claim 13, wherein a mixing of the liquid in each channel is achieved by providing that the volume of liquid moved in each half cycle from one longitudinal end of the reagent holder channels to the other is larger than the liquid volume under the adhesive surfaces, whereby the liquid at both ends of each channel is included in the mixing.

## Revendications

1. Dispositif pour la réalisation d'analyses immunologiques, histo- et cytochimiques, de biologie moléculaire, enzymologiques, chimiques cliniques et d'autres analyses, comprenant :
un porte-objet (1) comprenant au moins deux surfaces d'adhésion longitudinales (2) et un substrat en phase solide fixé sur celui-ci, et
un porte-réactif (5) comprenant au moins deux rainures longitudinales (6),
des moyens (11, 13, 14) étant prévus pour empêcher un débordement du liquide d'une rainure dans une rainure voisine,
**caractérisé en ce que** des moyens sont prévus, à l'aide desquels le porte-objet (1) et le porte-réactif (5) sont agencés à l'état relié à une position définie l'un par rapport à l'autre,
le porte-objet (1) peut être relié de manière amovible avec le porte-réactif (5) de telle sorte que chacune des surfaces d'adhésion longitudinales (2) soit respectivement opposée à une rainure (6), et de telle sorte le substrat en phase solide puisse être agencé sur les surfaces d'adhésion longitudinales (2) et qu'un liquide dans lequel des réactifs sont dissous puisse être agencé dans les rainures (6) de manière à ce que le substrat en phase solide et les réactifs soient en contact à l'état relié du porte-objet (1) et du porte-réactif (5), les rainures du porte-réactif dépassent en longueur au-dessus des extrémités longitudinales des surfaces d'adhésion du porte-objet,
et les bords des rainures dans la partie dépassant au-dessus des surfaces d'adhésion sont étirés vers le haut.

2. Dispositif selon la revendication 1, dans lequel des encoches (4) ou des seuils disposés parallèlement depuis une extrémité longitudinale des surfaces d'adhésion jusqu'à l'autre sont prévus entre des surfaces d'adhésion voisines.

3. Dispositif selon l'une quelconque des revendications précédentes, dans lequel les rainures du porte-réactif sont disposées sur des saillies longitudinales agencées sur la surface du porte-réactif, les saillies de rainures voisines étant séparées les unes des autres.

4. Dispositif selon l'une quelconque des revendications précédentes, dans lequel les bords latéraux des rainures sont effilés vers le haut et un débordement latéral du liquide hors des rainures est empêché à l'état relié du porte-objet et du porte-réactif.

5. Dispositif selon l'une quelconque des revendications précédentes, dans lequel la surface intérieure des rainures est munie d'un profil pour la conduction du liquide dans les rainures dans la direction longitudinale.

6. Dispositif selon l'une quelconque des revendications précédentes, dans lequel, pour augmenter la fonction de réservoir pour le liquide afin d'éviter les fuites, les rainures du porte-réactif dépassent longitudinalement (10) au-dessus des extrémités longitudinales des surfaces d'adhésion des porte-objets.

7. Dispositif selon la revendication 6, dans lequel les bords des rainures dans la partie dépassant au-dessus des surfaces d'adhésion sont étirés vers le haut afin de former un réservoir en forme de coupe (13) qui reçoit le liquide excédentaire.

8. Dispositif selon l'une quelconque des revendications précédentes, dans lequel un bord (8) proéminent par rapport à la surface d'adhésion est prévu sur l'ensemble de la périphérie de chaque surface d'adhésion du porte-objet.

9. Dispositif selon l'une quelconque des revendications précédentes, dans lequel des chicanes sont prévues dans la surface des rainures, au niveau desquelles des tourbillons se forment dans le liquide en cas de débordement du liquide.

10. Dispositif selon l'une quelconque des revendications précédentes, dans lequel des substrats en phase solide auxquels des partenaires de réaction sont reliés sont fixés sur les surfaces d'adhésion.

11. Dispositif selon la revendication 10, dans lequel les substrats en phase solide comprennent un matériau biologique, qui est choisi parmi :
a) les coupes minces de tissus biologiques,
b) les frottis cellulaires ou les prélèvements cellulaires,
c) les frottis bactériens,
d) les virus, les protozoaires et les parasites,
e) les gouttes d'antigènes appliquées en solution, séchée ou couplées,
f) les autres antigènes couplés à une surface et/ou
g) des séquences de nucléotides quelconques.

12. Procédé de réalisation d'analyses immunologiques, histo- et cytochimiques, de biologie moléculaire, enzymologiques, chimiques cliniques et d'autres analyses, **caractérisé en ce qu'**un dispositif selon l'une quelconque des revendications 1 à 11 est utilisé.

13. Procédé selon la revendication 12, selon lequel un mélange continu de chaque préparation d'analyse individuelle est obtenu par agitation périodique du porte-réactif conjointement avec le porte-objet disposé sur celui-ci depuis l'horizontale dans la direction longitudinale des rainures, de telle sorte que le liquide s'écoule d'un côté à l'autre en va-et-vient.

14. Procédé selon la revendication 12 ou la revendication 13, selon lequel un mélange du liquide dans chaque rainure est obtenu en ce que le volume de liquide déplacé lors de chaque demi-cycle depuis une extrémité longitudinale des rainures du porte-réactif vers l'autre est plus important que le volume de liquide sous les surfaces d'adhésion, le liquide aux deux extrémités de chaque rainure étant inclus dans le mélange.
